# EUROPEAN PATENT APPLICATION

(11) **EP 3 521 363 A1**
(43) Date of publication of application: **07.08.2019**
(21) Application number: 17855652.8
(22) Date of filing: 07.09.2017
(51) Int. Cl.: C08L 29/04, B29C 67/00, C08L 53/02, B33Y 70/00

(54) **RESIN COMPOSITION AND SUPPORT MATERIAL FOR LAMINATE SHAPING**

(30) Priority: 28.09.2016 JP 2016190004
(71) Applicant: Mitsubishi Chemical Corporation, Tokyo 1008251 (JP)
(72) Inventor: SAKAI Norihito, Osaka-shi Osaka 530-0018 (JP); FUKAMACHI Yuya, Osaka-shi Osaka 530-0018 (JP)
(74) Representative: Kuhnen & Wacker Patent- und Rechtsanwaltsbüro PartG mbB
(86) International application number: PCT/JP2017/032258
(87) International publication number: WO 2018/061694

(57) **Abstract**

A resin composition contains: (A) a polyvinyl alcohol resin; and (B) a block copolymer having a polymer block (b1) of an aromatic vinyl compound, and at least one of a polymer block (b2) of a conjugated diene compound or isobutylene and a hydrogenation block (b3) resulting from hydrogenation of the conjugated diene compound or isobutylene; wherein the polymer block (b1) of the aromatic vinyl compound is present in a proportion of not less than 10 wt.% based on the total amount of the polyvinyl alcohol resin (A) and the block copolymer (B). Where the resin composition is used for a support material for layered modeling, the support material is excellent in adhesion to an ABS resin that is used for a model material. Particularly, where a layered structure is formed from the resin composition on a product formed from the ABS resin, the layered structure has improved adhesion to the ABS resin product.

## Description

### TECHNICAL FIELD

The present disclosure relates to a resin composition to be used for layered modeling and for a layered-modeling support material to be finally removed, and to a layered-modeling support material produced by using the resin composition.

In the present disclosure, a model material means a material for an object to be formed, and a support material means a support formation material that facilitates the formation of the object from the model material and is removed after the formation of the object.

### BACKGROUND ART

Polyvinyl alcohol (hereinafter abbreviated as "PVA") resins are excellent in gas barrier property, toughness, transparency and the like and, therefore, are suitable for packaging materials for various articles.

However, the gas barrier property and other properties of PVA resins significantly vary due to water absorption and moisture absorption. Where such a PVA resin is used for a packaging material, therefore, a layer of the PVA resin is typically sandwiched between layers of a highly moisture-resistant resin in a multilayer structure.

In general, a coextrusion method is advantageously used for production of the multilayer structure from the viewpoint of production costs and the like. However, the melting point and the decomposition temperature of PVA resin are generally close to each other, so that melt forming is practically difficult. Therefore, the method for the production of the multilayer structure including the PVA resin layer is limited to a method including the steps of preparing an aqueous solution of the PVA resin, spreading and drying the aqueous solution to form a film, and laminating the resulting film with another film, or a method including the steps of preparing an aqueous solution of the PVA resin, applying the aqueous solution onto a film, and drying the aqueous solution to form a layer. This limitation significantly hinders widespread deployment of the PVA resins in packaging material applications.

For improvement of flexibility and impact resistance of resins, on the other hand, a substance having a lower elasticity modulus and incompatible with such a resin is blended with the resin, whereby a sea-island structure including an island component of the substance and a sea component of the resin is formed. This method is widely studied for the improvement without impairing the properties of the sea component resin.

A resin composition improved in flexibility and impact resistance is proposed, which has a sea-island structure formed by blending a styrene-based thermoplastic elastomer with a PVA resin and including a sea component of the PVA resin and an island component of the styrene-based thermoplastic elastomer (see, for example, PTL 1).

Further, a resin composition intended for improvement of flexural fatigue resistance is proposed, which contains a PVA resin having a 1,2-diol structural unit, a styrene-based thermoplastic elastomer, and a polyamide graft block copolymer containing a polymer block of an aromatic vinyl compound and a polymer block of an olefin compound in its main chain and having a polyamide graft chain, wherein the styrene-based thermoplastic elastomer serves as an island component to form a sea-island structure to thereby impart the resin composition with a gas barrier property (see, for example, PTL 2).

In recent years, the PVA resin is used as a support material for layered modeling. The layered modeling is a method for forming a three-dimensional object having a predetermined structure. In this method, a fluid material is extruded to form a layer, which is in turn solidified, and then the fluid material is further deposited on the resulting layer, whereby the object is formed. A UV curing method, a fused deposition modeling method and the like are proposed for the layered modeling method. Particularly, the fused deposition modeling method is widely used because an apparatus to be used for the method has a simplified structure.

The support material is used for the formation of the three-dimensional object by the layered modeling, and serves as a complementary material that fills an absent portion of the intended structure of the three-dimensional object. The three-dimensional object to be formed by the layered modeling has various structural portions, and some of the structural portions cannot be formed without support with some other material in the modeling process. The support material is used for supporting the structural portions of the three-dimensional object, and is finally removed.

A water-soluble resin that can be washed away with water is used as the support material, and an amorphous PVA resin is proposed as the water-soluble resin. In order to impart the PVA resin with flexibility, it is proposed to add a styrene-ethylene-butylene-styrene block copolymer (which is hereinafter sometimes abbreviated as "SEBS") as a styrene-based thermoplastic elastomer to the PVA resin (see, for example, PTL 3).

### RELATED ART DOCUMENTS

### PATENT DOCUMENTS

PTL 1: JP-A-2001-114977
PTL 2: JP-A-2012-046744
PTL 3: WO-A-2015/182681

### SUMMARY

A material recently employed for producing a three-dimensional object is called "model material" and various resins are studied as the model material. An acrylonitrile-butadiene-styrene resin (which is hereinafter sometimes abbreviated as "ABS resin") is mainly employed as the model material from a viewpoint of melt formability, thermal stability, and post-solidification mechanical properties.

However, the resin compositions disclosed in PTL 1 to PTL 3 are not satisfactory in adhesion to the ABS resin as the model material. Particularly, where PVA resin composition is provided as the support material on the ABS resin, the adhesion of the PVA resin composition with respect to the ABS resin still requires improvement.

In view of the foregoing, it is an object of the present disclosure to provide a resin composition that is improved in adhesion to the ABS resin, particularly, in adhesion to the ABS resin when a PVA resin layer is formed on the ABS resin.

In view of the foregoing, the inventor conducted intensive studies. As a result, the inventor focused on the proportion of an aromatic component in the resin composition, and found that the adhesion of the resin composition with respect to the ABS resin is improved by increasing the proportion of the aromatic component. Thus, the inventor achieved the present disclosure.

According to a first aspect of the present disclosure, there is provided a resin composition that contains: (A) a PVA resin; and (B) a block copolymer having a polymer block (b1) of an aromatic vinyl compound, and at least one of a polymer block (b2) of a conjugated diene compound or isobutylene and a hydrogenation block (b3) resulting from hydrogenation of the conjugated diene compound or isobutylene; wherein the polymer block (b1) of the aromatic vinyl compound is present in a proportion of not less than 10 wt.% based on the total amount of the PVA resin (A) and the block copolymer (B).

According to a second aspect of the present disclosure, there is provided a layered-modeling support material that contains the resin composition described above.

The resin composition of the present disclosure can provide a layered product having higher adhesion even when a layer of the resin composition is formed on a platform of a layered modeling apparatus or on a model material such as an ABS resin.

The effects of the present disclosure are supposedly provided because the compatibility between the resin composition and an aromatic component of the ABS resin is increased by increasing the proportion of the aromatic component of the resin composition.

Where the block copolymer (B) is present in a proportion of 10 to 80 parts by weight based on 100 parts by weight of the PVA resin (A), excellent flexibility can be ensured.

The PVA resin (A) is preferably a melt-formable PVA resin. In this case, the resin composition will find widespread applications.

Where the PVA resin (A) is a PVA resin (A1) having a primary hydroxyl group in its side chain, the resin composition is improved in water solubility.

Where the block copolymer (B) has an acid value of 0.5 to 20 mg CH₃ONa/g, the resin composition is excellent in releasability and forming stability.

Where the layered-modeling support material containing the resin composition is used, the support material exhibits excellent adhesion to the platform of the layered modeling apparatus and to the model material such as the ABS resin.

### BRIEF DESCRIPTION OF DRAWING

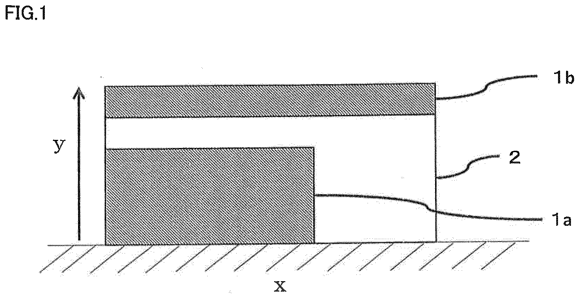

FIG. 1 is a schematic diagram illustrating an exemplary product formed by layered modeling and including a model material and a support material.

### DESCRIPTION OF EMBODIMENTS

Preferred embodiments of the present disclosure will be described in detail by way of example.

The present disclosure provides a resin composition containing: (A) a PVA resin; and (B) a block copolymer. The block copolymer (B) has a polymer block (b1) of an aromatic vinyl compound, and at least one of a polymer block (b2) of a conjugated diene compound or isobutylene, and a hydrogenation block (b3) resulting from hydrogenation of the conjugated diene compound or isobutylene.

The PVA resin (A) will be first described.

### [PVA resin (A)]

The PVA resin (A) is a resin mainly containing a vinyl alcohol structural unit and prepared by saponifying a polyvinyl ester resin prepared by polymerizing a vinyl ester monomer. The PVA resin (A) contains the vinyl alcohol structural unit in an amount corresponding to the saponification degree, and a vinyl ester structural unit left unsaponified.

Examples of the vinyl ester monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl versatate, among which vinyl acetate is preferably used for economy.

In the present disclosure, a melt-formable PVA resin is preferred because the resin composition can be used in widespread applications. Examples of the melt-formable PVA resin include a PVA resin having a primary hydroxyl group in its side chain (particularly, a PVA resin having a 1,2-diol structure in its side chain), an ethylene-modified PVA resin, and an unmodified PVA resin having a lower saponification degree.

The PVA resin (A) to be used in the present disclosure typically has an average polymerization degree of 150 to 4,000, preferably 200 to 2,000, particularly preferably 250 to 800, more preferably 300 to 500 (as measured in conformity with JIS K6726).

If the average polymerization degree is excessively low, it will be difficult to form the resin composition into a stable shape in melt forming. If the average polymerization degree is excessively high, the resin composition tends to have an excessively high viscosity, making melt forming difficult.

The viscosity of an aqueous solution of the PVA resin (A) is sometimes employed as an index of the polymerization degree of the PVA resin (A). The viscosity of the aqueous solution of the PVA resin (A) for use in the present disclosure is typically 1.5 to 20 mPa·s, preferably 2 to 12 mPa·s, particularly preferably 2.5 to 8 mPa·s, as measured at 20°C by using a 4 wt.% aqueous solution. If the viscosity is excessively low, it will be difficult to form the resin composition into a stable shape in melt forming. If the viscosity is excessively high, the resin composition tends to have an excessively high viscosity, making melt forming difficult.

In the present disclosure, the viscosity of the aqueous solution of the PVA resin (A) is the viscosity of the 4 wt.% aqueous solution of the PVA resin (A) measured at 20°C in conformity with JIS K6726.

The PVA resin (A) to be used in the present disclosure typically has a saponification degree of 70 to 99.9 mol %, preferably 75 to 98.5 mol %, particularly preferably 78 to 90 mol %. If the saponification degree is excessively high, the water solubility tends to be reduced. If the saponification degree is excessively low, the shape stability tends to be reduced in the layering because of an excessively high flexibility.

The saponification degree is measured in conformity with JIS K6726.

The PVA resin (A) typically has a melting point of 120°C to 230°C, preferably 150°C to 220°C, particularly preferably 160°C to 190°C. If the melting point is excessively high, the resin is liable to be deteriorated due to a higher processing temperature in the melt forming. If the melting point is excessively low, the shape stability tends to be reduced in the melt forming.

Typically, the PVA resin (A) mainly contains 1,3-diol bonds in its main chain, and has a 1,2-diol bond content of about 1.5 to 1.7 mol %. The 1,2-diol bond content can be increased by increasing the polymerization temperature for the polymerization of the vinyl ester monomer. The PVA resin (A) preferably has a 1,2-diol bond content of not less than 1.8 mol %, more preferably 2.0 to 3.5 mol % for improvement of the compatibility between the PVA resin (A) and the block copolymer (B) to be described later.

A modified PVA resin may be used as the PVA resin (A) in the present disclosure. Examples of the modified PVA resin include a copolymerization-modified PVA resin prepared by copolymerizing the vinyl ester monomer and a monomer copolymerizable with the vinyl ester monomer and saponifying the resulting copolymer, and a post-modified PVA resin prepared by post-reaction of the PVA resin.

Examples of the monomer to be copolymerized with the vinyl ester monomer for the copolymerization-modified PVA resin include: olefins such as ethylene, propylene, isobutylene, α-octene, α-dodecene, and α-octadecene; unsaturated acids such as acrylic acid, methacrylic acid, crotonic acid, maleic acid, maleic anhydride, and itaconic acid, and salts, monoalkyl esters and dialkyl esters of these unsaturated acids; nitriles such as acrylonitrile and methacrylonitrile; amides such as acrylamides and methacrylamides; olefin sulfonic acids such as ethylenesulfonic acid, allylsulfonic acid, and methallylsulfonic acid, and salts of these olefin sulfonic acids; alkyl vinyl ethers; N-acrylamidemethyltrimethylammonium chloride, allyltrimethylammonium chloride, dimethylallyl vinyl ketone, N-vinylpyrrolidone, vinyl chloride, and vinylidene chloride; polyoxyalkylene (meth)allyl ethers such as polyoxyethylene (meth)allyl ether and polyoxypropylene (meth)allyl ether; polyoxyalkylene (meth)acrylates such as polyoxyethylene (meth)acrylate and polyoxypropylene (meth)acrylate; polyoxyalkylene (meth)acrylamides such as polyoxyethylene (meth)acrylamide and polyoxypropylene (meth)acrylamide; polyoxyethylene (1-(meth)acrylamide-1,1-dimethylpropyl)ester; polyoxyethylene vinyl ether and polyoxypropylene vinyl ether; polyoxyethylene allylamine, polyoxypropylene allylamine, polyoxyethylene vinylamine, and polyoxypropylene vinylamine; hydroxyl-containing α-olefins such as 3-buten-1-ol, 4-penten-1-ol, and 5-hexen-1-ol, and acylation products and other derivatives of these hydroxyl-containing α-olefins.

Examples of the post-modified PVA resin include an acetoacetyl-containing PVA resin prepared by a reaction with a diketene, a polyalkylene oxide-containing PVA resin prepared by a reaction with ethylene oxide, a hydroxyalkyl-containing PVA resin prepared by a reaction with an epoxy compound, and PVA resins prepared by reactions with aldehyde compounds having various functional groups.

The modification degree of the modified PVA resin, i.e., the proportion of a structural unit derived from a monomer in the copolymer, or the proportion of a functional group introduced into the PVA resin by the post reaction, is not generally specified because the properties of the modified PVA resin significantly vary depending on a modifying group, but is typically 0.1 to 20 mol %, particularly preferably 0.5 to 15 mol %.

Of these modified PVA resins, melt-formable PVA resins are preferred in the present disclosure. Examples of the melt-formable PVA resins include a PVA resin (A1) having a primary hydroxyl group in its side chain such as a PVA resin (a1) having a 1,2-diol structure in its side chain and a hydroxymethyl-containing PVA resin, an ethylene-modified PVA resin, and a polyalkylene oxide-containing PVA resin. Particularly, the PVA resin (A1) having the primary hydroxyl group in its side chain is preferred, and the PVA resin (a1) having the 1,2-diol structure in its side chain is particularly preferred for excellent compatibility with the block copolymer (B).

Particularly, the PVA resin (a1) having the 1,2-diol structure in its side chain as represented by the following general formula (1) is preferred because the PVA resin (a1) has higher reactivity with the functional group of the block copolymer (B). 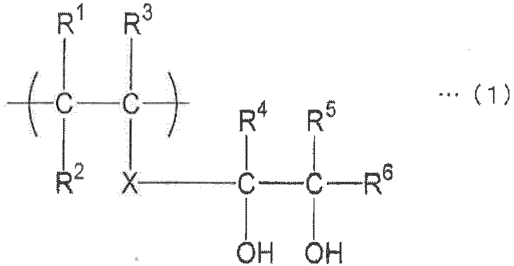 wherein R¹, R², and R³ are each independently a hydrogen atom or a C1 to C4 alkyl group, X is a single bond or a bonding chain, and R⁴, R⁵, and R⁶ are each independently a hydrogen atom or a C1 to C4 alkyl group.

Besides the 1,2-diol structural unit, the vinyl alcohol structural unit and the unsaponified vinyl ester structural unit are contained in the modified PAV resin, as in the ordinary PVA resin.

It is preferred that R¹ to R³ and R⁴ to R⁶ of the 1,2-diol structural unit in the general formula (1) are all hydrogen atoms. In this case, the hydroxyl group present at the terminal of the side chain is a primary hydroxyl group, so that the reactivity with the functional group of the block copolymer (B) is improved. However, some of R¹ to R³ and R⁴ to R⁶ may be each substituted by a C1 to C4 alkyl group, as long as the properties of the resin are not significantly impaired. Examples of the C1 to C4 alkyl group include methyl group, ethyl group, n-propyl group, isopropyl group, n-butyl group, isobutyl group, and tert-butyl group. As required, the C1 to C4 alkyl group may have a substituent such as halogen group, hydroxyl group, ester group, carboxylic acid group or sulfonic acid group.

In the 1,2-diol structural unit in the general formula (1), X is most preferably a single bond for thermal stability and stability at a higher temperature and under acidic conditions, but may be a bonding chain as long as the effects of the present disclosure are not impaired. Examples of the bonding chain include hydrocarbon chains such as alkylenes, alkenylenes, alkynylenes, phenylene and naphthylene (which may be substituted with a halogen such as fluorine, chlorine or bromine), -O-, -(CH₂O)ₘ-, -(OCH₂)ₘ-, -(CH₂O)ₘCH₂-, -CO-, -COCO-, -CO(CH₂)ₘCO-, -CO(C₆H₄)CO-, -S-, -CS-, -SO-, -SO₂-, -NR-, -CONR-, -NRCO-, -CSNR-, -NRCS-,-NRNR-, -HPO₄-, -Si(OR)₂-, -OSi(OR)₂-, -OSi(OR)₂O-, -Ti(OR)₂-, -OTi(OR)₂-, -OTi(OR)₂O-, -Al(OR)-, -OAl(OR)-, and -OAl(OR)O-, wherein Rs are each independently a given substituent, preferably a hydrogen atom or an alkyl atom, and m is an integer of 1 to 5. Of these bonding chains, an alkylene group having a carbon number of not greater than 6, particularly a methylene group or -CH₂OCH₂- is preferred for stability during production or during use.

The modification degree of the PVA resin (A1) having the primary hydroxyl group in its side chain (the proportion of the modifying group) is typically 0.1 to 20 mol %, preferably 0.5 to 15 mol %, more preferably 1 to 10 mol %, particularly preferably 3 to 8 mol %. If the modification degree is excessively low, the reactivity with the functional group of the block copolymer (B) tends to be reduced. If the modification degree is excessively high, deformation tends to occur during the layering because of an excessively low crystallization speed.

The PVA resin (A1) having the primary hydroxyl group in its side chain for use in the present disclosure typically has an average polymerization degree of 150 to 4,000, preferably 200 to 2,000, particularly preferably 250 to 800, more preferably 300 to 500 (as measured in conformity with JIS K6726).

If the average polymerization degree is excessively low, it will be difficult to form the resin composition into a stable shape during the melt forming. If the average polymerization degree is excessively high, the resin composition tends to have an excessively high viscosity, making the melt forming difficult.

The viscosity of an aqueous solution of the PVA resin (A1) having the primary hydroxyl group in its side chain is sometimes employed as an index of the polymerization degree of the PVA resin (A1). The viscosity of the aqueous solution of the PVA resin (A1) for use in the present disclosure is typically 1.5 to 20 mPa·s, preferably 2 to 12 mPa·s, particularly preferably 2.5 to 8 mPa·s, as measured at 20°C by using a 4 wt.% aqueous solution. If the viscosity is excessively low, it will be difficult to form the resin composition into a stable shape in the melt forming. If the viscosity is excessively high, the resin composition tends to have an excessively high viscosity, making the melt forming difficult.

In the present disclosure, the viscosity of the aqueous solution of the PVA resin (A1) having the primary hydroxyl group in its side chain is the viscosity of the 4 wt.% aqueous solution measured at 20°C in conformity with JIS K6726.

The PVA resin (A1) having the primary hydroxyl group in its side chain for use in the present disclosure typically has a saponification degree of 70 to 99.9 mol %, preferably 75 to 98.5 mol %, particularly preferably 78 to 90 mol %. If the saponification degree is excessively low, the shape stability tends to be reduced in the layering because of an excessively high flexibility.

The saponification degree is measured in conformity with JIS K6726.

A production method for the PVA resin (A1) having the primary hydroxyl group in its side chain will be described by taking the PVA resin (a1) having the 1,2-diol structure in its side chain as an example.

Exemplary production methods for the PVA resin (a1) having the 1,2-diol structure in its side chain include: (i) a method in which a copolymer of the vinyl ester monomer and a compound represented by the following general formula (2) is saponified; (ii) a method in which a copolymer of the vinyl ester monomer and a compound represented by the following general formula (3) is saponified and decarbonated; and (iii) a method in which a copolymer of the vinyl ester monomer and a compound represented by the following general formula (4) is saponified and deketalized. The PVA resin (a1) may be produced, for example, by a method described in paragraphs [0011] to [0019] of JP-A-2004-285143. 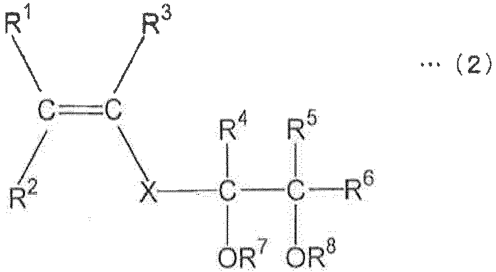 wherein R¹, R², and R³ are each independently a hydrogen atom or a C1 to C4 alkyl group, X is a single bond or a bonding chain, R⁴, R⁵, and R⁶ are each independently a hydrogen atom or a C1 to C4 alkyl group, and R⁷ and R⁸ are each independently a hydrogen atom or R⁹-CO- (wherein R⁹ is an alkyl group). 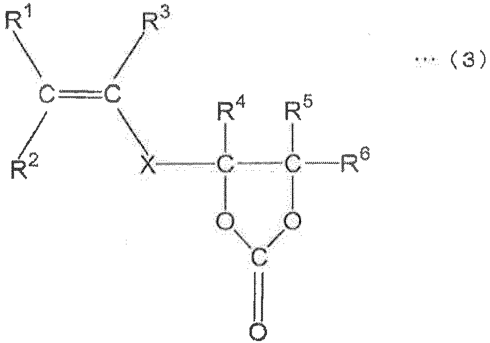 wherein R¹, R², and R³ are each independently a hydrogen atom or a C1 to C4 alkyl group, X is a single bond or a bonding chain, and R⁴, R⁵, and R⁶ are each independently a hydrogen atom or a C1 to C4 alkyl group. 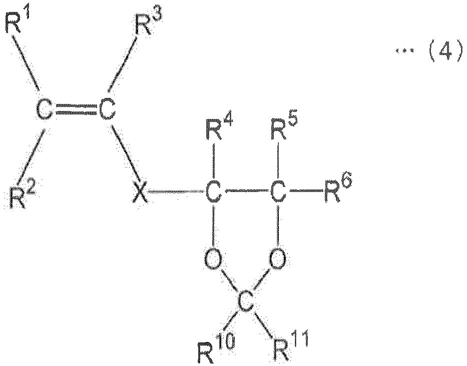 wherein R¹, R², and R³ are each independently a hydrogen atom or a C1 to C4 alkyl group, X is a single bond or a bonding chain, R⁴, R⁵, and R⁶ are each independently a hydrogen atom or a C1 to C4 alkyl group, and R¹⁰ and R¹¹ are each independently a hydrogen atom or a C1 to C4 alkyl group.

The PVA resin (A) to be used in the present disclosure may be a single type of PVA resin (A) or a mixture of two or more types of PVA resins (A). In the latter case, any of the unmodified PVA resins may be used in combination, or any of the unmodified PVA resins and any of the modified PVA resins may be used in combination. Particularly, any of the unmodified PVA resins and the PVA resin (a1) having the 1,2-diol structure in its side chain may be used in combination. Further, PVA resins having different saponification degrees, different polymerization degrees and different modification degrees may be used in combination.

### [Block Copolymer (B)]

The block copolymer (B) to be used in the present disclosure will be described.

The block copolymer (B) to be used in the present disclosure has a hard segment including a polymer block (b1) of an aromatic vinyl compound typified by styrene, and a soft segment including at least one of a polymer block (b2) of a conjugated diene compound or isobutylene, and a hydrogenation block (b3) resulting from hydrogenation of some or all of double bonds remaining in the polymer block (b2).

The block copolymer (B) to be used in the present disclosure preferably has a functional group reactive with a hydroxyl group in its side chain. More specifically, the block copolymer (B) preferably has a carboxylic acid group or a derivative of the carboxylic acid group (hereinafter sometimes referred to simply as "carboxylic acid group").

Where the hard segment is represented by X and the soft segment is represented by Y to show the block structure of the block copolymer, examples of the block copolymer include a diblock copolymer represented by X-Y, a triblock copolymer represented by X-Y-X or Y-X-Y, and a polyblock copolymer in which X and Y are alternately connected to each other. The block copolymer may have a linear structure or a branched structure. Particularly, a linear triblock copolymer represented by X-Y-X is preferred for dynamic properties.

Exemplary monomers to be used for the polymer block (b1) of the aromatic vinyl compound as the hard segment include: styrene; alkylstyrenes such as α-methylstyrene, β-methylstyrene, o-methylstyrene, m-methylstyrene, p-methylstyrene, t-butylstyrene, 2,4-dimethylstyrene, and 2,4,6-trimethylstyrene; halogenated styrenes such as monofluorostyrene, difluorostyrene, monochlorostyrene, and dichlorostyrene; methoxystyrene; vinyl compounds such as vinylnaphthalene, vinylanthracene, indene, and acetonaphthylene having aromatic rings other than a benzene ring, and derivatives of these vinyl compounds. The polymer block (b1) of the aromatic vinyl compound may be a homopolymer block of any of the monomers described above, or a copolymer block of plural monomers out of the monomers described above. Particularly, a homopolymer block of styrene is preferably used.

The polymer block (b1) of the aromatic vinyl compound may be a copolymer block obtained by copolymerizing the aromatic vinyl compound with a small amount of a monomer other than the aromatic vinyl compound, as long as the effects of the present disclosure are not impaired. Examples of the other monomer include olefins such as butene, pentene, and hexene, diene compounds such as butadiene and isoprene, vinyl ether compounds such as methyl vinyl ether, and allyl ether compounds. The copolymerization ratio of the other monomer is typically not greater than 10 mol % based on the overall amount of the polymer block (b1).

The polymer block (b1) of the aromatic vinyl compound in the block copolymer typically has a weight average molecular weight of 10,000 to 300,000, particularly preferably 20,000 to 200,000, more preferably 50,000 to 100,000.

Exemplary monomers to be used for formation of the polymer block (b2) of the conjugated diene compound or isobutylene as the soft segment include conjugated diene compounds such as 1,3-butadiene, isoprene (2-methyl-1,3-butadiene), 2,3-dimethyl-1,3-butadiene, and 1,3-pentadiene, and isobutylene, which may be used alone or in combination.

Particularly, homopolymer blocks and copolymer blocks of isoprene, butadiene, and isobutylene are preferred. Particularly, a homopolymer block of butadiene or isobutylene is preferably used.

The polymer block (b2) of the conjugated diene compound or isobutylene may have a plurality of bond forms due to polymerization. For example, butadiene forms a butadiene unit having a 1,2-bond (-CH₂-CH(CH=CH₂)-) and a butadiene unit having a 1,4-bond (-CH₂-CH=CH-CH₂-). The ratios of the units to be formed vary depending on the type of the conjugated diene compound and, hence, are not generally specified. In the case of butadiene, the ratio of the 1,2-bond-containing unit to be formed is typically 20 to 80 mol %.

Some or all of the double bonds remaining in the polymer block (b2) of the conjugated diene compound or isobutylene are hydrogenated, whereby the hydrogenation block (b3) is formed to improve the heat resistance and the weather resistance of the block copolymer (B). In this case, the hydrogenation ratio is preferably not less than 50 mol %, particularly preferably not less than 70 mol %.

For example, the butadiene unit having the 1,2-bond is hydrogenated into a butylene unit (-CH₂-CH(CH₂-CH₃)-), and the butadiene unit having the 1,4-bond is hydrogenated into two consecutive ethylene units (-CH₂-CH₂-CH₂-CH₂-). In general, the former unit is preferentially formed.

The polymer blocks (b2) and (b3) as the soft segment may each be a copolymer block obtained by copolymerization with a small amount of a monomer other than the monomer described above, as long as the effects of the present disclosure are not impaired. Examples of the other monomer include aromatic vinyl compounds such as styrene, olefins such as butene, pentene, and hexene, vinyl ether compounds such as methyl vinyl ether, and allyl ether compounds. The copolymerization ratio of the other monomer is typically not greater than 10 mol % based on the overall amount of the polymer block.

The polymer block derived from the conjugated diene compound or isobutylene in the block copolymer typically has a weight average molecular weight of 10,000 to 300,000, particularly preferably 20,000 to 200,000, more preferably 50,000 to 100,000.

As described above, the block copolymer (B) to be used in the present disclosure includes the hard segment including the polymer block of the aromatic vinyl compound, and the soft segment including the polymer block of the conjugated diene compound or the polymer block resulting from the hydrogenation of some or all of the double bonds remaining in the polymer block of the conjugated diene compound, or the polymer block of isobutylene, and the like. Typical examples of the block copolymer (B) include a styrene-butadiene block copolymer (SBS) obtained by using styrene and butadiene as ingredients, a styrene-butadiene-butylene block copolymer (SBBS) obtained by hydrogenating the side chain double bond of the butadiene structural unit of the SBS, a styrene-ethylene-butylene block copolymer (SEBS) obtained by hydrogenating the main chain double bond, a styrene-isoprene block copolymer (SIPS) obtained by using styrene and isoprene as ingredients, and a styrene-isobutylene block copolymer (SIBS) obtained by using styrene and isobutylene as ingredients. Particularly, the SEBS and the SIBS are preferably used, which are excellent in thermal stability and weather resistance.

The content ratio (weight ratio) of the polymer block (b1) of the aromatic vinyl compound as the hard segment to at least one of the polymer blocks (b2) and (b3) as the soft segment in the block copolymer is typically 30/70 to 70/30, particularly preferably 50/50 to 65/35. If the content ratio of the polymer block (b1) of the aromatic vinyl compound is excessively great, the resin tends to be hard and less flexible as a whole. If the content ratio of the polymer block (b1) of the aromatic vinyl compound is excessively small, on the other hand, the resin composition tends to have lower adhesion to the hydrophobic resin such as ABS resin.

The block copolymer (B) may be prepared by preparing a block copolymer having the polymer block (b1) of the aromatic vinyl compound and the polymer block (b2) of the conjugated diene compound or isobutylene and, as required, hydrogenating the double bonds of the polymer block of the conjugated diene compound.

First, a known method may be employed for producing the block copolymer having the polymer block (b1) of the aromatic vinyl compound and the polymer block (b2) of the conjugated diene compound or isobutylene. An exemplary method is such that the aromatic vinyl compound and the conjugated diene compound or isobutylene are successively polymerized in an inert organic solvent with the use of an alkyllithium compound as an initiator.

Next, a known method may be employed for hydrogenating the block copolymer having the polymer block of the aromatic vinyl compound and the polymer block of the conjugated diene compound. Exemplary methods for the hydrogenation include a method using a reducing agent such as a boron hydride compound, and a hydrogen reduction method using a metal catalyst such as platinum, palladium or Raney nickel.

The block copolymer (B) to be used in the present disclosure preferably further has a block (b4) having a functional group reactive with a hydroxyl group in its side chain. Particularly, the functional group is preferably a carboxylic acid group or a derivative of the carboxylic acid group. The use of the block copolymer having the functional group reactive with the hydroxyl group in its side chain makes it possible to provide a resin composition particularly excellent in releasability and shape stability.

The carboxylic acid group content of the block copolymer (B) is typically 0.5 to 20 mg CH₃ONa/g, particularly preferably 1 to 10 mg CH₃ONa/g, more preferably 1.5 to 3 mg CH₃ONa/g in terms of an acid value as measured by a titration method.

If the acid value is excessively low, it will be impossible to sufficiently provide the effects of the introduction of the carboxylic acid group. If the acid value is excessively high, on the other hand, the resin composition tends to have an excessively high melt viscosity due to a crosslinking reaction.

The acid value of the block copolymer (B) may be adjusted to a desired level not only by adjusting the amount of the functional group to be introduced but also by mixing a block copolymer having the functional group and a block copolymer not having the functional group to adjust the content of the functional group.

A known method may be used for the introduction of the functional group including the carboxylic acid group into the block copolymer (B). For example, a method in which an α,β-unsaturated carboxylic acid or a derivative thereof is copolymerized in the production of the block copolymer, i.e., in the copolymerization, or a method in which an α,β-unsaturated carboxylic acid or a derivative thereof is added to the block copolymer after the production of the block copolymer is preferably used. Exemplary methods for the addition include a method in which a radical reaction is allowed to proceed in a solution in the presence or absence of a radical initiator, and a method in which the α,β-unsaturated carboxylic acid or the derivative thereof is melt-kneaded with the block copolymer in an extruder.

Examples of the α,β-unsaturated carboxylic acid and the derivative thereof to be used for the introduction of the carboxylic acid group include α,β-unsaturated monocarboxylic acids such as acrylic acid and methacrylic acid and derivatives thereof; α,β-unsaturated dicarboxylic acids such as maleic acid, succinic acid, itaconic acid, and phthalic acid, and derivatives thereof; α,β-unsaturated monocarboxylates such as glycidyl acrylate, glycidyl methacrylate, hydroxyethyl acrylate, and hydroxymethyl methacrylate. Further, the carboxylic acid group introduced into the block copolymer (B) in the present disclosure may form an acid anhydride structure with a neighboring carboxylic acid group. Examples of the acid anhydride include α,β-unsaturated dicarboxylic anhydrides such as maleic anhydride, succinic anhydride, itaconic anhydride, and phthalic anhydride.

The block copolymer (B) to be used in the present disclosure typically has a weight average molecular weight of 50,000 to 500,000, particularly preferably 120,000 to 450,000, more preferably 150,000 to 400,000.

Further, the block copolymer (B) typically has a melt viscosity of 100 to 3,000 mPa·s, particularly preferably 300 to 2,000 mPa·s, more preferably 800 to 1,500 mPa·s, as measured at 220°C at a shear rate of 122 sec⁻¹.

If the weight average molecular weight is excessively great or excessively small, or the melt viscosity is excessively high or excessively low, it will be impossible to provide a desired morphology such that the block copolymer (B) is homogeneously dispersed in the PVA resin (A). Therefore, the mechanical properties of the resin tend to be deteriorated.

The weight average molecular weight of the block copolymer (B) is determined by gel permeation chromatography (GPC) based on polystyrene standard.

In the present disclosure, the block copolymer (B) may include a single type of block copolymer (B) or, as required, may include plural types of block copolymers (B), which are mixed together in order to provide desired properties.

Examples of commercially available products of the block copolymer (B) to be used in the present disclosure, i.e., the block copolymer (B) having the reactive functional group, include "TUFTEC M Series" which is carboxyl-modified SEBS available from Asahi Kasei Corporation, "f-DYNARON" available from JSR Corporation, and "KRATON FG" available from Shell Japan Co., Ltd.

### [Resin Composition]

The resin composition contains the PVA resin (A) and the block copolymer (B).

A feature of the present disclosure is that, in the resin composition containing the PVA resin (A) and the block copolymer (B), the proportion of the polymer block (b1) of the aromatic vinyl compound is not less than 10 wt.% based on the total amount of the PVA resin (A) and the block copolymer (B). The proportion of the polymer block (b1) is preferably 11 to 30 wt.%, particularly preferably 11.5 to 20 wt.%.

If the proportion of the polymer block (b1) of the aromatic vinyl compound is excessively small, the adhesion of the resin composition with respect to the ABS resin will be reduced.

In the present disclosure, the proportion of the block copolymer (B) is preferably 10 to 80 parts by weight, more preferably 15 to 75 parts by weight, particularly preferably 20 to 70 parts by weight, based on 100 parts by weight of the PVA resin (A). If the proportion of the block copolymer (B) is excessively small, the flexibility tends to be insufficient. If the proportion of the block copolymer (B) is excessively great, the water solubility tends to be reduced.

The resin composition forms a sea-island structure including a sea component of the PVA resin (A) and an island component of the block copolymer (B).

The average particle diameter of the block copolymer (B) as the island component of the sea-island structure is measured by observing a section of a film melt-formed from the resin composition by means of a SEM (scanning electron microscope). The average particle diameter is typically 0.3 to 10 µm, preferably 0.3 to 5 µm, particularly preferably 0.5 to 3 µm. If the average particle diameter is excessively small, the flexibility tends to be deteriorated. If the average particle diameter is excessively great, it will be impossible to form a product from the resin composition.

The resin composition may contain another resin, as long as the effects of the present disclosure are not impaired. Examples of the resin to be contained include thermoplastic resins such as saponified ethylene-vinyl acetate copolymers, polyamide resins, polyester resins, polyethylene resins, polypropylene resins, and polystyrene resins.

As required, the resin composition may contain a reinforcing agent, a filler, a plasticizer, a pigment, a dye, a lubricant, an antioxidant, an antistatic agent, a UV absorber, a heat stabilizer, a light stabilizer, a surfactant, an antibacterial agent, an antistatic agent, a desiccant, an antiblocking agent, a flame retarder, a crosslinking agent, a curing agent, a blowing agent, a nucleating agent, and the like, as long as the effects of the present disclosure are not impaired.

Particularly, the resin composition may contain the plasticizer for the flexibility. Examples of the plasticizer include: aliphatic polyhydric alcohols such as ethylene glycol, hexanediol, glycerin, trimethylolpropane, and diglycerin; alkylene oxides such as ethylene oxide, propylene oxide, and a mixed adduct of ethylene oxide and propylene oxide; saccharides such as sorbitol, mannitol, pentaerythritol, xylol, arabinose, and ribulose; phenol derivatives such as bisphenol-A and bisphenol-S; amide compounds such as N-methylpyrrolidone; and glucosides such as α-methyl-D-glucoside. The proportion of the plasticizer is preferably not greater than 20 parts by weight, more preferably not greater than 10 parts by weight, particularly preferably not greater than 5 parts by weight, based on 100 parts by weight of the PVA resin (A).

The resin composition may be prepared by a method and an apparatus to be used for mixing ordinary polymer ingredients, preferably by a melt kneading method. Exemplary apparatuses for the melt kneading method include a kneading machine, an extruder, a mixing roll, a Banbury mixer, and a kneader. Particularly, a method using an extruder capable of continuously kneading the ingredients at an excellent mixing efficiency is advantageous.

For the preparation of the resin composition by the melt kneading by means of the extruder, the melting points and the like of the ingredients to be used should be properly adjusted. The melting points are typically adjusted in a range of 190°C to 250°C, particularly preferably 200°C to 230°C, more preferably 210°C to 220°C.

The retention time of the ingredients in the extruder varies depending on the capacity, the temperature and the like of the extruder, but is typically 0.1 to 5 minutes, particularly 0.5 to 2 minutes.

The resin composition prepared by the mixing is typically provided in a pellet form or a powdery form for use as a forming material. Particularly, the pellet form is preferred in order to suppress problems associated with the feeding of the resin composition into a forming machine, the handling of the resin composition, and the occurrence of fine particles.

A known method may be used for pelletizing the resin composition. An efficient method for the pelletization is such that the resin composition is extruded into strands from the extruder and the strands are cooled and cut to a predetermined length to provide cylindrical pellets.

### [Support Material for Layered Modeling]

The resin composition is advantageously used for a support material for layered modeling, because the resin composition is excellent in adhesion to an ABS resin, particularly in adhesion to the ABS resin when being applied onto the ABS resin.

The support material for the layered modeling (which is hereinafter sometimes referred to simply as "support material") contains the resin composition.

As required, the support material may contain known additives such as a filler, a plasticizer, an antioxidant, a colorant, an antistatic agent, a UV absorber, and a lubricant, or some other thermoplastic resin in addition to the PVA resin (A) and the block copolymer (B).

The support material is fed in a strand form to a head of a layered modeling apparatus. Therefore, the support material preferably has a proper rigidity for smooth feeding thereof. The strand-form support material is often fed through a tube to the head of the layered modeling apparatus and, therefore, preferably has a highly slidable surface with respect to an inner surface of the tube. Further, the strand-form support material preferably has a smooth and less tacky surface so as to be smoothly fed to the head of the layered modeling apparatus.

Particularly, the strand-form support material preferably contains the filler so as to be imparted with a proper rigidity and a less tacky property. The filler may be an organic filler or an inorganic filler, and the inorganic filler is preferred for excellent thermal stability. Examples of the inorganic filler include oxides, hydroxides, carbonates, sulfates, silicates, nitrides, carbon materials, and metals. The filler is preferably a silicate because the silicate is less likely to influence the thermal stability of the support material. Examples of the silicate include calcium silicate, talc, clay, mica, montmorillonite, bentonite, active white clay, sepiolite, imogolite, sericite, glass fibers, glass beads, and silica balloons. Talc is preferred because the surface of the support material is imparted with higher smoothness and lower tackiness.

The inorganic filler preferably has an average particle diameter of 0.5 to 10 µm, more preferably 1 to 5 µm, particularly preferably 2 to 3 µm. If the average particle diameter is excessively small, it will be difficult to knead the inorganic filler with the resin. If the average particle diameter is excessively great, the support material tends to have a rough surface and a reduced strength. Industrially available examples of the inorganic filler include SG-95 and SG-200 available from Nippon Talc Co., Ltd., and LSM-400 available from Fuji Talc Industrial Co., Ltd. The average particle diameter is herein defined as a particle diameter D50 determined by a laser diffraction method.

The proportion of the filler to be contained is preferably 0.1 to 20 wt.%, more preferably 0.5 to 10 wt.%, particularly preferably 1 to 5 wt.%, based on the weight of the resin composition. If the proportion of the filler is excessively small, it will be impossible to provide the effect of the addition of the filler. If the proportion of the filler is excessively great, the support material tends to have a less smooth surface and a reduced strength.

The support material often contains the plasticizer. However, the proportion of the plasticizer to be contained is preferably minimized for improvement of the forming stability of the support material. The proportion of the plasticizer is preferably not greater than 20 wt.%, more preferably not greater than 10 wt.%, still more preferably not greater than 5 wt.%, particularly preferably not greater than 2 wt.%.

Specific examples of the other thermoplastic resin to be contained include olefin homopolymers and copolymers such as linear low-density polyethylenes, low-density polyethylenes, medium-density polyethylenes, high-density polyethylenes, ethylene-vinyl acetate copolymers, ionomers, ethylene-propylene copolymers, ethylene-α-olefin (C4 to C20 α-olefin) copolymers, ethylene-acrylate copolymers, polypropylenes, propylene-α-olefin (C4 to C20 α-olefin) copolymers, polybutenes, and polypentenes, polycycloolefins, and polyolefin resins in a broader sense, such as obtained by graft-modifying any of these olefin homopolymers and copolymers with an unsaturated carboxylic acid or a carboxylate, polystyrene resins, polyesters, polyamides, copolymerized polyamides, polyvinyl chlorides, polyvinylidene chlorides, acrylic resins, vinyl ester resins, polyurethane elastomers, chlorinated polyethylenes, and chlorinated polypropylenes.

The support material suitable for the layered modeling is produced by mixing predetermined amounts of the aforementioned ingredients, heating, melting and kneading the ingredients, extruding the resulting mixture into a strand, cooling the strand, and winding the strand around a spool. More specifically, the ingredients are preliminarily mixed together and fed into a single-screw or multi-screw extruder, or the ingredients are separately fed into the extruder, and heated and melt-kneaded in the extruder. Then, the resulting mixture is extruded through a single-hole or multi-hole strand die into strands each having a diameter of 1.5 to 3.0 mm, and the strands are cooled by air or water to be solidified and wound around a spool. The strands are each required to have a stable diameter, to have flexibility and toughness sufficient to be free from breakage even when being wound around the spool, and to have rigidity sufficient to be smoothly fed to the head during the layered modeling.

### [Layered Modeling Method]

A layered modeling method using the support material will be described.

Usable as a layered modeling apparatus for the layered modeling is a known apparatus that includes a plurality of heads adapted to push out the model material and the support material and is capable of layered modeling by heat melting. Examples of the known apparatus include layered modeling apparatuses of dual head type such as Flashforge's CREATE, Raise Enterprise's Eagleed, and 3D System's MBot Grid II. Examples of the model material for forming a three-dimensional object now under consideration include ABS resins, and various resins such as polylactic acids, polystyrenes, polyamides and polyethylenes. ABS resins are mainly used from the viewpoint of melt formability, thermal stability and post-solidification mechanical properties. Therefore, the support material is required to be excellent in adhesion to the ABS resins.

Like the support material, the model material is formed into a strand, which is in turn wound around a spool. In this state, the model material is provided. The strands of the model material and the support material are respectively fed to the heads of the layered modeling apparatus, respectively heat-melted in the heads, and pressed onto a platform to be layered.

The model material and the support material are typically melted at a temperature of 150°C to 300°C in the heads, and extruded at a pressure of 200 to 1000 psi to a layer thickness of 0.05 to 0.2 mm.

The support material is removed from a layered product formed from the support material and the model material in the aforementioned manner, whereby an intended product is produced by the layered modeling. The support material is dissolved in water to be removed. For the removal of the support material by the dissolution, the layered product may be immersed in water or hot water contained in a container, or may be washed away with running water. During the immersion, it is preferred to stir the water or apply ultrasonic waves to the water in order to reduce the time required for the removal. The temperature of the water is preferably about 25°C to 80°C. The weight of the water or the hot water to be used for the removal by the dissolution is about 10 to about 10,000 times the weight of the support material.

### EXAMPLES

The present disclosure will be described specifically by way of examples thereof. It should be understood that the present disclosure be not limited to these examples within the scope of the present disclosure. In the following examples, "parts" means parts by weight.

### Example 1

### [Preparation of PVA Resin (A)]

First, 85 parts of vinyl acetate (corresponding to 10 wt.% of the overall amount of vinyl acetate for initial feeding), 460 parts of methanol, and 7.6 parts of 3,4-diacetoxy-1-butene were fed into a reaction can provided with a reflux condenser, a dropping funnel and a stirrer, and then 0.32 parts of azobisisobutylonitrile was added to the reaction can. The resulting mixture was heated in a nitrogen gas stream with stirring, whereby polymerization was started. After a lapse of 0.5 hours from the start of the polymerization, 765 parts of vinyl acetate was fed dropwise into the reaction can in 8 hours (at a dropping rate of 95.6 parts/hour). After lapses of 2.5 hours and 4.5 hours from the start of the polymerization, 0.2 parts of azobisisobutylonitrile was added to the reaction can. When the polymerization degree of vinyl acetate reached 85%, a predetermined amount of m-dinitrobenzene was added to the reaction can to terminate the polymerization. Subsequently, an unreacted part of the vinyl acetate monomer was expelled out of the system by blowing methanol vapor into the reaction can. Thus, a methanol solution of a copolymer was prepared.

In turn, the solution was diluted with methanol to a solid concentration of 50 wt.%, and the resulting methanol solution was fed into a kneader. While the solution temperature was maintained at 35°C, a methanol solution containing sodium hydroxide at a sodium concentration of 2 wt.% was added to the resulting solution in a proportion of 9 mmol based on 1 mol of the total of a vinyl acetate structural unit and a 3,4-diacetoxy-1-butene structural unit. Thus, saponification was allowed to proceed. When a saponification product precipitated in a particulate form during the saponification, the 2 wt.% methanol solution was added to the resulting solution in a proportion of 4 mmol based on 1 mol of the total of the vinyl acetate structural unit and the 3,4-diacetoxy-1-butene structural unit, whereby the saponification was allowed to further proceed. Thereafter, 0.8 equivalents of acetic acid based on the added sodium hydroxide amount was added to the resulting solution for neutralization. Then, the resulting product was filtered out, thoroughly rinsed with methanol, and dried in a hot air drier. Thus, a PVA resin (a1) having a 1,2-diol structure in its side chain was prepared.

The thus-prepared PVA resin (a1) having the 1,2-diol structure in its side chain had a saponification degree of 86 mol % as determined through an analysis based on an alkali consumption required for hydrolysis of vinyl acetate and 3,4-diacetoxy-1-butene structural units remaining in the resin. The PVA resin (a1) had an average polymerization degree of 380 as determined through an analysis performed in conformity with JIS K6726.

The proportion of the 1,2-diol structural unit represented by the above formula (1) was 4 mol % as determined through calculation based on an integral value obtained through ¹H-NMR (300 MHz proton NMR performed at 50°C by using a d6-DMSO solution and an internal standard of tetramethylsilane).

### [Production of Support Material]

First, 100 parts of the PVA resin (A) described above and 43 parts of a mixture prepared as a block copolymer (B) (having an acid value of 2 mg CH₃ONa/g) by preliminarily dry-blending a styrene-ethylene-butylene block copolymer (SEBS) having a carboxylic acid group (TUFTEC M1943 available from Asahi Kasei Corporation, and having a styrene content of 20 wt.% and an acid value of 10 mg CH₃ONa/g) and a styrene-ethylene-butylene block copolymer (SEBS) not having a carboxylic acid group (TUFTEC H1043 available from Asahi Kasei Corporation, and having a styrene content of 67 wt.% and an acid value of 0) in a weight ratio of 20:80 were dry-blended, and then the resulting blend (having a styrene polymer block content of 17.4 wt.% based on the total weight of the PVA resin (A) and the block copolymer (B)) was fed into a twin screw extruder and melt-kneaded under the following conditions to be extruded into a strand having a diameter of 1.75 mm. The strand was cooled in air on a belt, and wound around a spool. Thus, a support material was produced.

Extruder: Available from Technovel Corporation, and having a diameter of 15 mm and L/D = 60
Extrusion temperatures: C1/C2/C3/C4/C5/C6/C7/C8/D = 150/170/180/190/200/210/220/220/220 (°C) Rotation speed: 200 rpm Extrusion rate: 1.5 kg/hour
The support material thus produced was evaluated in the following manner.

### [Evaluation for Adhesion in Open System]

The support material (filament) produced in the aforementioned manner and an ABS resin model material (filament) (ABS White 1.75 mm available from Verbatim Corporation) were set in a 3D printer (Ninjabot's FDM-200HW-X), and a cubic object having a structure shown in FIG. 1 was formed on a platform x by layered modeling with a layering direction y. The cubic object was evaluated for adhesion in the following modeling portions (interfaces) α, β, and γ. The results are shown in Table 1.

### <Modeling Portions>

Portion α: An interface between the platform x and a support material member 1a
Portion β: An interface between the support material member 1a and an ABS resin member 2
Portion γ: An interface between the ABS resin member 2 and a support material member 1b

### <Evaluation Criteria>

○○: Modeling was possible, and adhesion strength between the members was high, making it impossible to separate the members from each other by hand.

○: Modeling was possible, but adhesive strength between the members was low, so that the members were easily separated from each other by hand.

Δ: Modeling of more than about 20 vol.% of the object was impossible.

×: Modeling was impossible.

### [Evaluation for Modeling Property in Closed System]

A hooded 3D printer (MAKERBOT REPLICATOR 2X available from Stratasys Ltd.) was used, and the system internal temperature was set at 50°C. The support material (filament) produced in the aforementioned manner and an ABS resin model material (filament) (ABS White 1.75 mm available from Verbatim Corporation) were set in the 3D printer, and a cubic object having a structure shown in FIG. 1 was formed on a platform x by layered modeling with a layering direction y. The support material was evaluated for feedability during the modeling based on the following criteria. The results are shown in Table 1.

○: Modeling was possible without stagnation of the support material.

Δ: The object formed by the modeling was distorted with the support material unstably fed.

×: Modeling was impossible due to failure in feeding the support material.

### Example 2

A support material was produced in substantially the same manner as in Example 1, except that the proportion of the block copolymer (B) was changed to 67 parts and the styrene polymer block content based on the total weight of the PVA resin (A) and the block copolymer (B) was changed to 23.2 wt.%. The support material was evaluated in the same manner as in Example 1. The results are shown in Table 1.

### Example 3

A support material was produced in substantially the same manner as in Example 1, except that the proportion of the block copolymer (B) was changed to 25 parts and the styrene polymer block content based on the total weight of the PVA resin (A) and the block copolymer (B) was changed to 11.6 wt.%. The support material was evaluated in the same manner as in Example 1. The results are shown in Table 1.

### Example 4

A support material was produced in substantially the same manner as in Example 1, except that the SEBS having the carboxylic acid group for the block copolymer (B) was changed from TUFTEC M1943 available from Asahi Kasei Corporation to TUFTEC M1913 (having a styrene content of 30% and an acid value of 10 mg CH₃ONa/g) and the styrene polymer block content based on the total weight of the PVA resin (A) and the block copolymer (B) was changed to 18 wt.%. The support material was evaluated in the same manner as in Example 1. The results are shown in Table 1.

### Example 5

A support material was produced in substantially the same manner as in Example 4, except that the PVA resin (A) was changed to a PVA resin having a 1,2-diol structure in its side chain and having a saponification degree of 99 mol %, an average polymerization degree of 360, and a modification degree of 4 mol %. The support material was evaluated in the same manner as in Example 4. The results are shown in Table 1.

### Comparative Example 1

A support material was produced in substantially the same manner as in Example 1, except that a PVA resin having a 1,2-diol structure in its side chain and having a saponification degree of 86 mol %, an average polymerization degree of 360, and a modification degree of 3 mol % was used as the PVA resin (A), and an SEBS having a carboxylic acid group (TUFTEC M1911 available from Asahi Kasei Corporation, and having a styrene content of 30 wt.% and an acid value of 2 mg CH₃ONa/g) was used alone as the block copolymer (B), and that the styrene polymer block content based on the total weight of the PVA resin (A) and the block copolymer (B) was 9 wt.% and the acid value was 2 mg CH₃ONa/g. The support material was evaluated in the same manner as in Example 1. The results are shown in Table 1.

### Comparative Example 2

A support material was produced in substantially the same manner as in Example 1, except that an SEBS having a carboxylic acid group (TUFTEC M1911 available from Asahi Kasei Corporation, and having a styrene content of 30 wt.% and an acid value of 2 mg CH₃ONa/g) was used alone as the block copolymer (B), and that the styrene polymer block content based on the total weight of the PVA resin (A) and the block copolymer (B) was 9 wt.% and the acid value was 2 mg CH₃ONa/g. The support material was evaluated in the same manner as in Example 1. The results are shown in Table 1.

### Comparative Example 3

A support material was produced in substantially the same manner as in Example 1, except that a PVA resin having a 1,2-diol structure in its side chain and having a saponification degree of 99 mol %, an average polymerization degree of 360, and a modification degree of 7.2 mol % was used as the PVA resin (A), and an SEBS having a carboxylic acid group (TUFTEC M1911 available from Asahi Kasei Corporation, and having a styrene content of 30 wt.% and an acid value of 2 mg CH₃ONa/g) was used as the block copolymer (B), and that the styrene polymer block content based on the total weight of the PVA resin (A) and the block copolymer (B) was 9 wt.% and the acid value was 2 mg CH₃ONa/g. The support material was evaluated in the same manner as in Example 1. The results are shown in Table 1.

**Table 1**

| | Example 1 | Example 2 | Example 3 | Example 4 | Example 5 | Comparative Example 1 | Comparative Example 2 | Comparative Example 3 |
|---|---|---|---|---|---|---|---|---|
| PVA resin (A) | | | | | | | | |
| Saponification degree (mol %) | 86 | 86 | 86 | 86 | 99 | 86 | 86 | 99 |
| Average polymerization degree | 380 | 380 | 380 | 380 | 360 | 360 | 380 | 360 |
| Modification degree (mol %) | 4 | 4 | 4 | 4 | 4 | 3 | 4 | 7.2 |

| Block copolymer (B) | | | | | | | | |
|---|---|---|---|---|---|---|---|---|
| Proportion (parts) | 43 | 67 | 25 | 43 | 43 | 43 | 43 | 43 |
| Acid value (mg CH₃ONa/g) | 2 | 2 | 2 | 2 | 2 | 2 | 2 | 2 |

| Resin composition including (A) and (B) (for support material) | | | | | | | | |
|---|---|---|---|---|---|---|---|---|
| Styrene polymer block content (wt.%) based on total weight of (A) and (B) | 17.4 | 23.2 | 11.6 | 18 | 18 | 9 | 9 | 9 |

| Evaluation for adhesion in open system | | | | | | | | |
|---|---|---|---|---|---|---|---|---|
| Portion α | ○○ | ○○ | ○○ | ○○ | ○○ | ○○ | ○○ | ○○ |
| Portion β | ○○ | ○○ | ○○ | ○○ | ○○ | ○ | ○ | ○ |
| Portion γ | ○○ | ○○ | ○ | ○○ | ○ | Δ | Δ | × |
| Evaluation for modeling property (feedability) in closed system | ○ | ○ | ○ | ○ | ○ | × | Δ | Δ |

The above results indicate that the support materials of Examples 1 to 5 each produced by using the resin composition were excellent in adhesion in the respective portions, and excellent in modeling property in the closed system. In contrast, the support materials of Comparative Examples 1 to 3 each having a smaller styrene polymer block content were partly poorer in adhesion, and poorer in modeling property in the closed system than the support materials of Examples 1 to 5.

While specific forms of the embodiments of the present disclosure have been shown in the aforementioned examples, the examples are merely illustrative of the disclosure but not limitative of the disclosure. It is contemplated that various modifications apparent to those skilled in the art could be made within the scope of the disclosure.

The resin composition of the present disclosure is excellent in adhesion to an ABS resin and, in addition, is excellent in modeling property in a closed system. Therefore, the resin composition is useful for a support material for layered modeling.

### REFERENCE SIGNS LIST

1a, 1b: Support material members
2: ABS resin member

## Claims

1. A resin composition comprising:
(A) a polyvinyl alcohol resin; and
(B)
a block copolymer comprising
a polymer block (b1) of an aromatic vinyl compound, and
at least one of
a polymer block (b2) of a conjugated diene compound or isobutylene and
a hydrogenation block (b3) resulting from hydrogenation of the conjugated diene compound or isobutylene;
wherein the polymer block (b1) of the aromatic vinyl compound is present in a proportion of not less than 10 wt.% based on a total amount of the polyvinyl alcohol resin (A) and the block copolymer (B).

2. The resin composition according to claim 1, wherein the block copolymer (B) is present in a proportion of 10 to 80 parts by weight based on 100 parts by weight of the polyvinyl alcohol resin (A).

3. The resin composition according to claim 1 or 2, wherein the polyvinyl alcohol resin (A) is a melt-formable polyvinyl alcohol resin.

4. The resin composition according to any one of claims 1 to 3, wherein the polyvinyl alcohol resin (A) is a polyvinyl alcohol resin (A1) comprising a primary hydroxyl group in its side chain.

5. The resin composition according to any one of claims 1 to 4, wherein the block copolymer (B) has an acid value of 0.5 to 20 mg CH₃ONa/g.

6. A support material for layered modeling, comprising the resin composition according to any one of claims 1 to 5.
